**Europäisches Patentamt**

**European Patent Office**

**Office européen des brevets**

(19)

(11) Veröffentlichungsnummer: **0 213 585**
**B1**

(12) # EUROPÄISCHE PATENTSCHRIFT

(45) Veröffentlichungstag der Patentschrift:
**31.01.90**

(51) Int. Cl.⁴: **F 16 K 31/08**

(21) Anmeldenummer: **86111742.2**

(22) Anmeldetag: **25.08.86**

(54) Elektromagnetisch betätigte Ventilanordnung.

(30) Priorität: **26.08.85 DE 3530453**

(43) Veröffentlichungstag der Anmeldung:
**11.03.87 Patentblatt 87/11**

(45) Bekanntmachung des Hinweises auf die Patenterteilung:
**31.01.90 Patentblatt 90/5**

(84) Benannte Vertragsstaaten:
**DE FR GB IT NL SE**

(56) Entgegenhaltungen:
**DE-A- 2 826 212**
**DE-B- 1 232 424**
**FR-A- 2 129 734**
**FR-A- 2 254 741**
**FR-A- 2 385 964**
**GB-A- 1 417 669**

(73) Patentinhaber: **Siemens Elema AB, Röntgenvägen 2,**
**S-171 95 Solna 1 (SE)**

(84) Benannte Vertragsstaaten: **SE**

(73) Patentinhaber: **Siemens Aktiengesellschaft,**
**Wittelsbacherplatz 2, D-8000 München 2 (DE)**

(84) Benannte Vertragsstaaten: **DE FR GB IT NL**

(72) Erfinder: **Renheim, Gunnar, Ernst-Josephsons-Vaeg 8,**
**S-161 55 Bromma (SE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine elektromagnetisch betätigte Ventilanordnung für strömende Medien mit einer Hülse, in der ein Einlass- und ein Auslassventil mit jeweils einem Ventilsitz angebracht ist, zwischen denen ein axial verschiebbar angeordneter Permanentmagnet vorgesehen ist, über den das Strömen des Mediums vom Einlass- zum Auslassventil regelbar ist, und dass der Permanentmagnet in seinem äusseren Bereich und auf beiden Seiten Fortsätze aufweist, die in der Bewegungsrichtung des Permanentmagneten verlaufen und sich über die Ventilsitze erstrecken.

Bei Ventilanordnungen dieser Art arbeitet der Permanentmagnet mit einer hohen Frequenz, damit die Ventile in möglichst kurzer Zeit geschlossen bzw. geöffnet werden können. Wenn ein Luftspalt zwischen dem Permanentmagneten und der Hülse für die Durchströmung des Mediums vorgesehen ist, kann es passieren, dass der Permanentmagnet in eine Schräglage gerät und dadurch in der Hülse klemmt. In der DE-B-1 232 424 ist eine Ventilanordnung beschrieben, bei der das erwähnte Problem gelöst wird, indem als Permanentmagnet ein radialmagnetisierter Zylindermagnet und eine Hülse aus einem magnetisierbaren Metall verwendet wird. Die Herstellung eines solchen Permanentmagneten ist kompliziert und teuer.

Durch die DE-A-2 757 659 ist eine weitere elektromagnetisch betätigte Ventilanordnung mit einem zylindrischen Anker aus Eisen beschrieben, der das Strömen eines Gases zwischen zwei Ventilen regelt. Der Anker, dessen Aussenwand an der Innenwand eines hülsenförmigen Eisenkörpers gleitet, weist für die Durchführung des Gases in dessen Umfangsfläche mehrere Längsnuten und eine axiale Bohrung auf. Zur Ableitung des Gases münden im Auslassventil entweder konzentrisch angeordnete Strömungsbohrungen oder ein konzentrisch verlaufender Ringspalt, die nicht mit den Längsnuten bzw. der axialen Bohrung des Ankers deckungsgleich sind. In der FR-A-2 129 734 ist eine Ventilanordnung der eingangs genannten Art beschrieben, bei der der Permanentmagnet an der Innenwand eines hülsenförmigen Eisenkörpers, die mit einer Teflonschicht versehen ist, gleitet. Der Permanentmagnet weist mehrere Bohrungen für die Durchführung des Gases auf. Wegen der Vielzahl von Nuten und Bohrungen im Anker bzw. Permanentmagneten ist die Herstellung dieser Ventilanordnungen verhältnismässig aufwendig.

Der Erfindung liegt die Aufgabe zugrunde, eine Ventilanordnung der eingangs genannten Art zu schaffen, die in der Herstellung einfach und daher billig ist und die auch bei hohen Frequenzen des Permanentmagneten zuverlässig arbeitet.

Diese Aufgabe ist erfindungsgemäss dadurch gelöst, dass die Länge der Fortsätze im Verhältnis zum Abstand zwischen den Ventilsitzen und die radialen Abstände zwischen Ventilsitzen und Fortsätzen sowie zwischen diesen und der Hülse so bemessen sind, dass der Permanentmagnet oder seine Fortsätze nicht mit letzterer in Berührung kommen können. Hierdurch kann der Permanentmagnet nicht in der Hülse steckenbleiben.

Eine weitere Vereinfachung der Montage ergibt sich dadurch, dass der Spulenkörper die Hülse bildet. Es werden dadurch wenige Teile bei dem Aufbau der Ventilanordnung benötigt.

Im Hinblick auf eine günstige konstruktive Ausgestaltung empfiehlt es sich, dass die Fortsätze aus einem Rohr gebildet sind, in dem der Permanentmagnet befestigt ist. Hierdurch ist eine Vereinfachung des Aufbaus der Fortsätze gegeben.

In einer vorteilhaften Ausbildung der Erfindung wird vorgeschlagen, dass jeder Ventilsitz über den Umfang verteilt Erhöhungen aufweist. Zwischen diesen und dem Rohr des Permanentmagneten ist ein axiales Spiel vorgesehen. Das Gas vom Einlass- zum Auslassventil wird zwischen Rohr und Erhöhungen geführt, wobei eine verhältnismässig kurze Verengung für das Gas und dadurch ein kleiner Widerstand erhalten wird.

Die Erfindung ist nachfolgend anhand eines in den Zeichnungen dargestellten Ausführungsbeispiels näher erläutert. Es zeigen:

Fig. 1 einen Querschnitt durch eine Ventilanordnung nach der Erfindung,

Fig. 2 eine Draufsicht eines Ventilsitzes der Ventilanordnung nach Fig. 1,

Fig. 3 eine weitere Seitenansicht der erfindungsgemässen Ventilanordnung nach Fig. 1 und

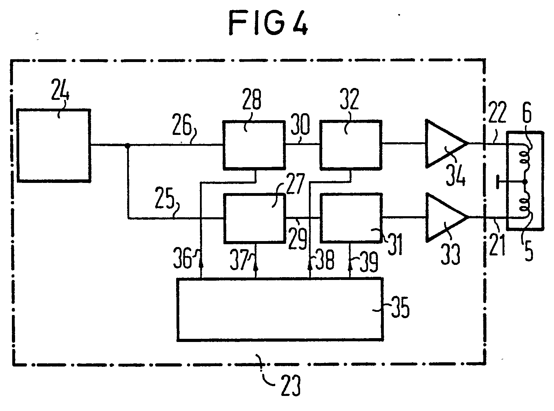

Fig. 4 in einem Blockschaltbild eine mögliche Ausführungsform eines Vorschaltgerätes.

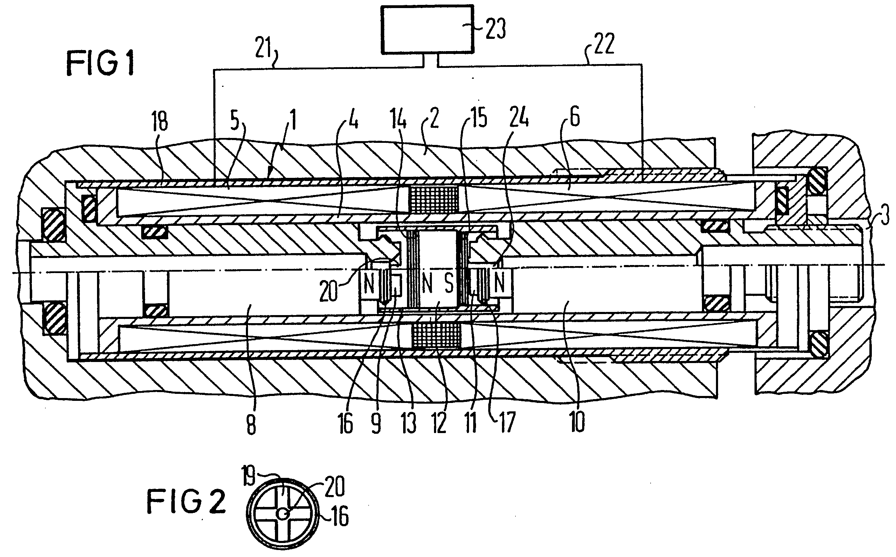

In der Figur 1 ist eine Ventilanordnung 1 gezeigt, die in einem Gehäuse 2 angebracht ist. Das Gehäuse 2 mit der Ventilanordnung 1 ist einerseits an einem nicht dargestellten Beatmungsgerät und andererseits an einer Gaszufuhrleitung 3 zu einem ebenfalls nicht dargestellten Patienten angeschlossen. Die Ventilanordnung 1 weist eine Hülse 4 auf, die als Spulenkörper für Magnetspulen 5, 6 dient. Im Spulenkörper 4 ist ein Einlassventil 8 mit einem Ventilsitz 9 und einem Auslassventil 10 mit einem Ventilsitz 11 angebracht. Um die Magnetfelder zu verstärken sind die Ventile 8, 10 aus einem magnetisierbaren Material hergestellt. Zwischen den Ventilsitzen 9, 11 ist ein axial verschiebbar angeordneter Permanentmagnet 12 vorgesehen, der in einem Rohr 13, das sich über die Ventilsitze 9, 11 erstreckt, befestigt ist. Die beiden Enden des Permanentmagneten sind mit einer Kunststoffschicht 14, 15, die als Dichtungen bzw. Dämpfungen für die Ventilsitze 9, 11 dienen, versehen. Die Ventilsitze 9, 11 weisen auf der Aussenwand ringförmige Wülste 16, 17 auf, deren Durchmesser kleiner ist als der des Rohres 13, so dass ein Spalt zwischen den Wülsten 16, 17 und dem Rohr 13 vorhanden ist. Ferner sind die radialen Abstände zwischen den Wülsten 16, 17 und dem Rohr 13 sowie zwischen diesem und dem Spulenkörper 4 so bemessen, dass das Rohr 13 mit dem Permanentmagneten 12 nicht mit der Innenwand des Spulenkörpers 4 in Berührung kommen kann. Die Ventilanordnung 1 ist schliesslich mit einer Abdeckungshülse 18 versehen. Die Ventilanordnung 1 ist über Verbindungsleitungen 21, 22 mit einem bekannten und daher als Block dargestellten Vorschaltgerät 23 zur Regelung der Speisung der Magnetspulen 5, 6 verbunden.

In der Figur 2 ist gezeigt, dass die Stirnfläche des Ventilsitzes 9 mit Nuten 19 versehen ist, die von einer Ventilöffnung 20 des Einlassventils 8 zur Aussenwand des Ventilsitzes 9 verlaufen.

In diesem Ausführungsbeispiel bildet die dem Ventilsitz 9 zugewandte Seite des Permanentmagneten 12 den Nordpol N und die dem Ventilsitz 11 zugewandte Seite den Südpol S. Wenn die Magnetspulen 5, 6 mit einem Stromstoss vom Vorschaltgerät 23 die Ventile 8, 10 so erregen, dass sie eine nordpolige Polarität erhalten, wirkt eine Kraft auf den Permanentmagnet, die diesen in Richtung auf den Ventilsitz 11 bewegt. Die Kunststoffschicht 15 legt sich dabei abdichtend vor die Öffnung 24 des Ventilsitzes 11, so dass die Gaszufuhr zum Patienten gesperrt wird, wie es in Figur 1 gezeigt ist.

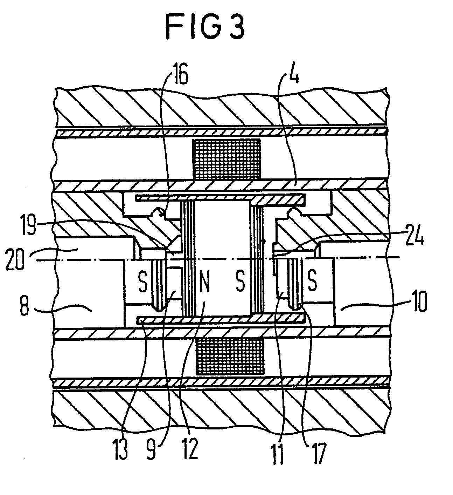

Wenn Gas zum Patienten zugeführt werden soll, werden die Magnetspulen 5, 6 durch einen weiteren Stromstoss umgekehrter Polarität so erregt, dass eine entgegengesetzte Polarität auftritt. Dadurch wird der Permanentmagnet 12 zum Ventilsitz 9 des Einlassventils 8 bewegt. Diese Lage des Permanentmagneten 12 ist in der Figur 3 gezeigt. Das Einatmungsgas strömt nun zunächst durch die Ventilöffnung 20 und die Nuten 19, zwischen der Wulst 16 und der Innenwand des Rohres 13, zwischen Innenwand des Spulenkörpers 4 und der Aussenwand des Rohres 13. Das Gas wird danach zwischen der Wulst 17 und Innenwand des Rohres 13 über die Öffnung 24 und der Gaszufuhrleitung 3 zum Patienten geleitet. Durch die Länge des Rohres 13 im Verhältnis zum Abstand der Ventilsitze 9, 11 und durch die radialen Abstände zwischen den Wülsten 16, 17 und dem Rohr 13 ist ein sicheres Öffnen und Schliessen der Ventilanordnung 1 auch im Langzeitbetrieb gewährleistet, ohne die Gefahr, dass das Rohr 13 bzw. der Permanentmagnet 12 in der Hülse 4 klemmt.

Das Vorschaltgerät 23 weist einen Impulsgenerator 24 auf, der Impulse mit einer festen Frequenz erzeugt. Diese werden parallel über Leitungen 25 bzw. 26 auf monostabile Kippstufen 27 bzw. 28 gegeben. Die Ausgangssignale dieser Kippstufen werden über Leitungen 29 bzw. 30 Verstärker 31 bzw. 32 zugeführt, deren Ausgangssignale über Endverstärker 33, 34 die Magnetspulen 5 und 6 ansteuern. Über eine Kontrolleinheit 35 kann über Leitungen 36 bis 39 unbhängig voneinander die Zeitdauer des metastabilen Zustandes der monostabilen Kippstufen und damit die Impulsbreite sowie über die Verstärker 31, 32 die Amplitude dieser Impulse eingestellt werden. Den Magnetspulen 5 und 6 kann dadurch ein Wechselfeld mit unterschiedlicher Daueramplitude zugeführt werden. Dadurch ist es möglich, den Permanentmagneten gemäss Figur 1 oder 3 derart zu steuern, dass er um eine gewünschte Lage zwischen den Ventilsitzen 9, 11 oszilliert. Beispielsweise kann diese gewünschte Lage in der Nähe des Ventilsitzes 11 liegen, so dass der Gasfluss durch das Ventil 10 gedrosselt wird. Durch das beschriebene Vorschaltgerät 23 kann der Gasfluss durch die Ventilanordnung 1 stufenlos beliebig geregelt werden.

**Patentansprüche**

1. Elektromagnetisch betätigte Ventilanordnung (1) für strömende Medien mit einer Hülse (4), in der ein Einlass- (8) und ein Auslassventil (10) mit jeweils einem Ventilsitz (9, 11) angebracht sind, zwischen denen ein axial verschiebbar angeordneter Permanentmagnet (12) vorgesehen ist, über den das Strömen des Mediums vom Einlass- (8) zum Auslassventil (10) regelbar ist, und dass der Permanentmagnet (12) in seinem äusseren Bereich und auf beiden Seiten Fortsätze (13) aufweist, die in der Bewegungsrichtung des Permanentmagneten (12) verlaufen und sich über die Ventilsitze (9, 11) erstrecken, dadurch gekennzeichnet, dass die Länge der Fortsätze (13) im Verhältnis zum Abstand zwischen den Ventilsitzen (9, 11) und die radialen Abstände zwischen Ventilsitzen (9, 11) und Fortsätzen (13) sowie zwischen diesen und der Hülse (4) so bemessen sind, dass der Permanentmagnet (12) oder seine Fortsätze (13) nicht mit letzterer in Berührung kommen können.

2. Ventilanordnung nach Anspruch 1 mit einem gemeinsamen Spulenkörper für die Magnetspulen, dadurch gekennzeichnet, dass der Spulenkörper (4) die Hülse bildet.

3. Ventilanordnung nach Anspruch 1 oder 2, dadurch gekennzeichnet, dass die Fortsätze (13) aus einem Rohr gebildet sind, in dem der Permanentmagnet (12) befestigt ist.

4. Ventilanordnung nach einem der Ansprüche 1 bis 3, dadurch gekennzeichnet, dass jeder Ventilsitz (9, 11) über den Umfang verteilte Erhöhungen (16, 17) aufweist.

5. Ventilanordnung nach Anspruch 4, dadurch gekennzeichnet, dass die Erhöhungen (16, 17) eine Wulst bilden.

**Claims**

1. Elektromagnetic valve device (1) for flowing media having a casing (4), in which an inlet valve (8) and an outlet valve (10) are arranged, each having a valve seat (9, 11), between which an axially displaceably arranged permanent magnet (12) is provided, by means of which the flow of the medium from the inlet valve (8) to the outlet valve (10) is controllable, and the permanent magnet (12) has extensions (13) in its exterior region and on both sides, which extensions run in the direction of movement of the permanent magnet (12) and extend over the valve seats (9, 11), characterized in that the length of the extensions (13), in relation to the distance between the valve seats (9, 11), and the radial distances between valve seats (9, 11) and extensions (13) as well as between the latter and the casing (4) are dimensioned such that the permanent magnet (12) or its extensions (13) cannot come into contact with the said casing (4).

2. Valve device according to Claim 1 with a common coil form for the magnet coils, characterized in that the coil form (4) forms the casing.

3. Valve device according to Claim 1 or 2, characterized in that the extensions (13) are formed from a pipe, in which the permanent magnet (12) is fixed.

4. Valve device according to one of Claims 1 to 3, characterized in that each valve seat (9, 11) has raised parts (16, 17) distributed over the circumference.

5. Valve device according to Claim 4, characterized in that the raised parts (16, 17) form a bulge.

## Revendications

1. Dispositif à soupapes (1) à commande par voie électromagnétique pour des milieux à écoulement, comportant une douille (4) dans laquelle sont ménagées une soupape d'admission (8) et une soupape d'évacuation (10) avec respectivement un siège de soupape, et entre lesquelles est prévu, avec possibilité de déplacements axiaux, un aimant permanent (12) à l'aide duquel est réglable l'écoulement du milieu de la soupape d'admission (8) à la soupape d'évacuation (10), l'aimant permanent (12) présentant dans ses parties extérieures, et sur deux côtés, des appendices (13) qui se situent dans la direction du déplacement de l'aimant permanent (12) et qui s'étendent au-delà des sièges de soupapes (9, 11), caractérisé par le fait que la longueur des appendices (13), par rapport à la distance entre les sièges de soupapes (9, 11) et les distances radiales entre les sièges de soupapes (9, 11) et les appendices (13), ainsi qu'entre ces derniers et la douille (4), sont dimensionnées de telle façon que l'aimant permanent (12) ou ses appendices (13) ne peuvent pas venir en contact avec cette dernière.

2. Dispositif à soupapes selon la revendication 1, comportant un corps de bobine commun pour les bobines d'électro-aimants, caractérisé par le fait que le corps de bobine (4) forme la douille.

3. Dispositif à soupapes selon la revendication 1 ou 2, caractérisé par le fait que les appendices (13) sont formés par un tube dans lequel est fixé l'aimant permanent (12).

4. Dispositif à soupapes selon l'une des revendications 1 à 3, caractérisé par le fait que chaque siège de soupape (9, 11) comporte des parties saillantes (16, 17) réparties sur la périphérie.

5. Dispositif à soupapes selon la revendication 4, caractérisé par le fait que les parties saillantes (16, 17) forment un bourrelet.

FIG 1

FIG 2

EP 0 213 585 B1

# FIG 3

# FIG 4